# EUROPEAN PATENT APPLICATION

(11) **EP 3 553 643 A1**
(43) Date of publication of application: **16.10.2019**
(21) Application number: 16923995.1
(22) Date of filing: 12.12.2016
(51) Int. Cl.: G06F 3/0488

(54) **TOUCH SCREEN MODULE, AND ELECTRONIC APPARATUS**

(71) Applicant: Shenzhen Royole Technologies Co., Ltd., Shenzhen, Guangdong 518172 (CN)
(72) Inventor: YANG, Songling, Shenzhen Guangdong 518052 (CN); YANG, Fan, Shenzhen Guangdong 518052 (CN); LIN, Qi, Shenzhen Guangdong 518052 (CN)
(74) Representative: Hamer, Christopher K.
(86) International application number: PCT/CN2016/109454
(87) International publication number: WO 2018/107321

(57) **Abstract**

A touch screen module (100) is applied to an electronic device. The touch screen module (100) includes a protecting cover (10) and a flexible sensor (20) configured to sense a touch. The flexible sensor (20) fits within the protecting cover (10). A first distance is from a first position on the flexible sensor (20) to a first corresponding position on the protecting cover (10). A sensing range of the flexible sensor (20) at the first position is not less than the first distance. Even though a position on the flexible sensor (20) can sense a touch at a position away from the protecting cover (10) to make a response, such that the flexible sensor (20) has no touch blind area, and a sensing coverage of the touch screen module (100) may be improved.

## Description

### TECHNICAL FIELD

The present disclosure relates to a field of electronics, and more particularly to a touch screen module and an electronic device.

### BACKGROUND

With the performance requirement for lighter, thinner, and faster of electronic products, more and more rigid touch sensors are replaced by flexible touch sensors to meet the needs of more attractive touch designs. The existing touch screen module is usually attached directly to a plane or a two-dimensional surface of an object. However, when the touch screen module is applied to a complex surface or an irregular surface, how to ensure touch sensitivity after fitting the touch screen module on the complex surface or the irregular surface, the industry has not given a good solution. Especially for some angular or right-angled positions, the existing touch screen module fails to sense touch objects, which causing touch blind areas.

### SUMMARY

Embodiments of the present disclosure provide a touch screen module, to avoid a blind area.

The present disclosure further provides an electronic device.

The present disclosure provides a touch screen module. The touch screen module includes a protecting cover and a flexible sensor configured to sense a touch. The flexible sensor fits within the protecting cover. A first distance is from a first position on the flexible sensor to a first corresponding position on the protecting cover. A sensing range of the flexible sensor at the first position is not less than the first distance.

The flexible sensor spaces from the protecting cover at the first position.

The flexible sensor is spaced from the protecting cover by a gap existing at the first position.

The flexible sensor further includes a second position. A second distance is from the second position on the flexible sensor to a second corresponding position on the protecting cover. The second distance is less than the first distance.

The flexible sensor attaches to the protecting cover at the second position.

The sensing range of the flexible sensor at the first position is greater than that of the flexible sensor at the second position.

A voltage of the flexible sensor at the first position is greater than a voltage of the flexible sensor at the second position.

A voltage of the flexible sensor at the first position is equal to a voltage of the flexible sensor at the second position.

The first position on the flexible sensor is a bending area of the flexible sensor. The first corresponding position on the protecting cover is a bending area of the protecting cover.

The bending area of the protecting cover is a right-angle area.

The bending area of the flexible sensor is a rounded corner area.

The flexible sensor further comprises a non-bending area. A voltage at the bending area of the flexible sensor is greater than a voltage at the non-bending area of the flexible sensor.

The first position on the flexible sensor is the non-bending area of the flexible sensor. The first corresponding position on the protecting cover is a bending area of the protecting cover.

The protecting cover is in a sphere shape; the flexible sensor is in a cubic shape. Vertexes of the flexible sensor contact with the protecting cover. The non-bending areas of the flexible sensor are six planes of the flexible sensor. The bending area of the protecting cover is a spherical surface corresponding to the six planes of the flexible sensor.

A voltage at the non-bending area of the flexible sensor is greater than a voltage at other areas of the flexible sensor.

The present disclosure further provides an electronic device, including the above touch screen module.

The present disclosure provides a touch screen module. The touch screen module is applied to an electronic device. The touch screen module includes a protecting cover and a flexible sensor configured to sense a touch. The flexible sensor fits within the protecting cover. A first distance is from a first position on the flexible sensor to a first corresponding position on the protecting cover. A sensing range of the flexible sensor at the first position is not less than the first distance. Even though a position on the flexible sensor, which is far from the protecting cover, can sense a touch to make a response, such that the flexible sensor has no touch blind area, and the sensing coverage of the touch screen module may be improved.

### BRIEF DESCRIPTION OF THE DRAWINGS

In order to more clearly illustrate the technical solution embodied by the embodiments of the present disclosure, the accompanying drawings required for describing the embodiments will be briefly described below. Apparently, the accompanying drawings in the following description are merely some embodiments of the present disclosure, and other drawings may be obtained by those skilled in the art according to these accompanying drawings without paying any creative labor.
FIG. 1 is a schematic diagram of a touch screen module provided by a first embodiment of a first scheme of the present disclosure.
FIG. 2 is a schematic diagram of a touch screen module provided by a second embodiment of a first scheme of the present disclosure.

### DETAILED DESCRIPTION

The technical solutions in the embodiments of the present disclosure are clearly and completely described below with reference to the accompanying drawings in the embodiments of the present disclosure.

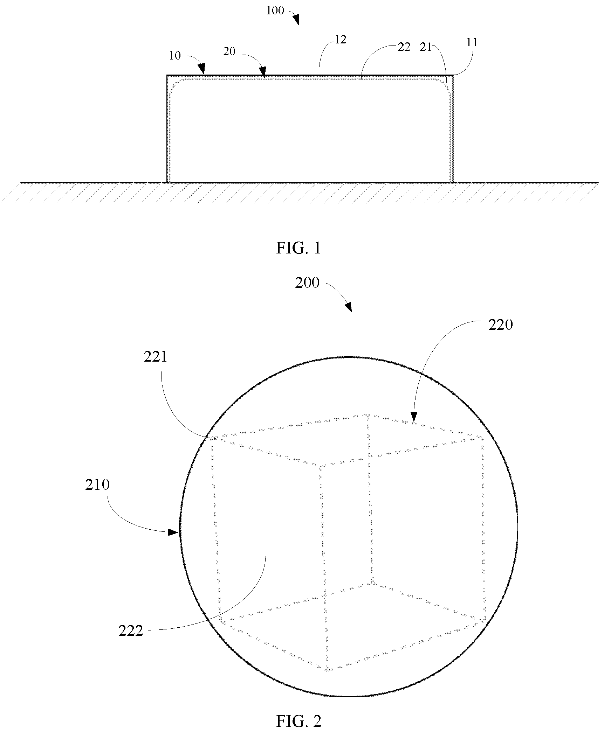

As illustrated in FIG. 1, a touch screen module 100 is provided by a first embodiment of a first scheme of the present disclosure. The touch screen module 100 is applied to an electronic device to sense a touch. The touch screen module 100 includes a protecting cover 10 and a flexible sensor 20 configured to sense a touch. The flexible sensor 20 fits within the protecting cover 10. It is a first distance from a first position 21 on the flexible sensor 20 to a first corresponding position 11 on the protecting cover 10. A sensing range of the flexible sensor 20 at the first position is not less than the first distance.

A sensing range refers to a maximum range that the flexible sensor 20 can sense a touch object. Beyond the maximum distance, a touch object cannot be sensed by the flexible sensor 20. In the embodiment, the first distance is a distance from the first position 21 on the flexible sensor 20 to the first corresponding position 11 on the protecting cover 10. The first distance is greater than or equal to distances from other positions on the flexible sensor 20 to other corresponding positions on the protecting cover. When a touch object, operated by a user, touches the first corresponding position 11 on the protecting cover 10, since the first sensing range is greater than or equal to the first distance, the flexible sensor 20 can sense the touch object to generate a touch signal. It should be noted that, the term "distance" in the embodiment refers to a distance between an intersection point of a perpendicular line and the protecting cover 10, and a certain position on the flexible sensor. The perpendicular line is drawn at the certain position on the flexible sensor, and extends along a direction perpendicular to the certain position on the flexible sensor 20.

Specifically, the flexible sensor 20 may be a flexible suspension touch sensor. In the application of the flexible suspension touch sensor, there is no need to directly touch the touch screen module. That is, touch objects (such as fingers) can be sensed without touching a screen of a touch display panel directly, just by suspending the finger in mid-air. Suspension touch is mainly realized by the self-capacitance generated by the flexible sensor. Of course, infrared, acoustic wave, and the like may also be applied to realize the suspension touch.

In this embodiment, the flexible sensor 20 is spaced from the protecting cover 10 at the first position 21. Specifically, the flexible sensor 20 is spaced from the protecting cover 10 by a gap existing at the first position 21. The flexible sensor 20 can also include a second location 22. It is a second distance from the second position 22 on the flexible sensor 20 to a second corresponding position 12 on the protecting cover 10. The first distance is greater than the second distance. A sensing range of the flexible sensor 20 at the second position 12 is greater than or equal to the second distance. Since a voltage at the first position 21 is the same as a voltage at the second position 22, the sensing range of the flexible sensor 20 at the first position 21 is the same as the sensing range of the flexible sensor 20 at the second position 22. It will be apprehended that, the voltage at the first position 21 can be different from the voltage at the second position 22. For example, the voltage at the first position 21 is greater than the voltage at the second position 22, so that a first sensing range of the flexible sensor 20 at the first position 21 is greater than a second sensing range of the flexible sensor 20 at second location 22.

The flexible sensor 20 attaches to the protecting cover 10 at the second position 22.

It should be noted that, the protecting cover 10 is in a cubic shape. Since a principle of the flexible sensor 20 is that a transparent conductive material is attached on a flexible substrate, the conductive material may fracture and lead to sensor failure when the conductive material being bent into 90 degrees. Therefore, the flexible sensor 20 cannot be bent into a right-angle of 90 degrees, so a certain angle should be ensured for a fitting. For example, the flexible sensor 20 can be formed in a circular arc shape at a position that the flexible sensor needs to be bent into 90 degrees.

In this embodiment, the first position 21 on the flexible sensor 20 is a bending area of the flexible sensor 20, and the first corresponding position 11 of the protecting cover 10 is a bending area of the protecting cover. Specifically, the bending area of the protecting cover 10 may be a right-angle area (or an angular area). The bending area of the flexible sensor 20 spaces from the bending area of the protecting cover 10 by a gap, and a non-bending area of the flexible sensor 20 closely attaches to a non-bending area of the protecting cover 10. It will be apprehended that, the gap may also be filled with materials, such as viscose, to support the flexible sensor 20. The bending area of the flexible sensor 20 is a rounded corner area.

Since it is the first distance from the first position 21 on the flexible sensor 20 to the first corresponding position 11 on the protecting cover 10, and the first distance is less than or equal to the first sensing range of the flexible sensor 20 at the first position, a position on the flexible sensor 20 can also sense a touch at a position away from the protecting cover 10 to make a response. Such that the flexible sensor 20 has no touch blind area, and the sensing coverage of the touch screen module 100 may be improved.

Furthermore, the flexible sensor 20 further includes the non-bending area, and a voltage at the bending area of the flexible sensor 20 is higher than that of the non-bending area, so that a sensing range of the bending area of the flexible sensor 20 is greater than that of the non-bending area of the flexible sensor 20.

It should be noted that, although the bending area of the flexible sensor 20 is far away from the right-angle area of the protecting cover 10, the sensing range of the bending area of the flexible sensor 20 is large relatively, thus a touch on the right-angle area of the protecting cover 10 can still be sensed to make a response.

As illustrated in FIG. 2, a touch screen module 200 is provided by a second embodiment of a first scheme of the present disclosure. The touch screen module 200 provided by the second embodiment is similar to the touch screen module 100 provided by the first embodiment, and the difference between the two is that, in the second embodiment, a first preset position 222 on the flexible sensor 220 is a non-bending area of the flexible sensor, and a first corresponding position on the protecting cover 210 is a bending area of the protecting cover.

Specifically, the protecting cover 210 is in a sphere shape. The flexible sensor 220 is in a cubic shape. Vertexes 221 (a junction area of three planes of the flexible sensor 220) of the flexible sensor 220 contact the protecting cover 210. The non-bending areas 222 of the flexible sensor 220 are six planes of the flexible sensor 210. The bending area of the protecting cover 210 is a spherical surface corresponding to the six planes of the flexible sensor 210. The non-bending areas of the flexible sensor 220 are spaced from the bending area of the flexible sensor 210 by gaps. Of course, the gaps can be filled with materials.

It should be noted that, the flexible sensor 220 is in a cubic shape because it is constructed by the six planes of the flexible sensor 220.

Similar to the previous embodiment, a sensing range of the flexible sensor 220 at the first position 222 is greater than or equal to a distance from the first position 222 to the corresponding position on the protecting cover 210. Therefore, a touch applied to the spherical surface of the protecting cover 210 corresponding to the six planes of the flexible sensor 220, can be also sensed and responded to by a corresponding plane of the flexible sensor 220. At the same time, the scheme also solves a problem that the flexible sensor cannot attach to a three-dimensional curved surface. Of course, the flexible sensor 220 may also include a second position, and a sensing range of the flexible sensor 220 at the second position may be equal to or smaller than a sensing range of the flexible sensor 220 at the first position.

Voltages at the non-bending areas of the flexible sensor 220 are higher than that at other positions of the flexible sensor 220.

An electronic device provided by an embodiment of a second scheme of the present disclosure, includes a touch screen module. The touch screen module can be the touch screen module 100 provided by the first embodiment of the first scheme or the touch screen module 200 provided by the second embodiment. Since the touch screen module 100 or 200 is described in detail in the above first scheme, it will not be described in further in detail.

In the embodiment, the electronic device includes the touch screen module 100. The touch screen module 100 includes the flexible sensor 20 and the protecting cover 10. It is a first distance from a first position 21 on the flexible sensor 20 to a first corresponding position 11 on the protecting cover 10. The first distance is less than or equal to a sensing range of the flexible sensor 20 at the first position 21. A position on the flexible sensor 20, can also sense a touch at a position away from the protecting cover 10 to make a response. Such that the flexible sensor 20 has no touch blind area, and a sensing coverage of the touch screen module 100 may be improved.

It will be apprehended that, the term "protecting cover" called in the present disclosure refers to an object encapsulated on the outside of the flexible sensor to protect the flexible sensor. The thickness, rigidity, material, and the like of the protecting cover may be selected according to actual needs. That is, the protecting cover may be a thin film layer or a thick plate layer. The protecting cover may be made of a rigid material or a flexible material. The protecting cover may be made of a transparent material or an opaque material.

The foregoing description merely depicts some exemplary embodiments of the disclosure. It should be noted that, those skilled in the art may also make a plurality of improvements and refinements without departing from the principles of the present disclosure. The plurality of improvements and refinements should all be encompassed within the protection of the present disclosure.

## Claims

1. A touch screen module, comprising:
a protecting cover; and
a flexible sensor configured to sense a touch, wherein the flexible sensor fits within the protecting cover; a first distance is from a first position on the flexible sensor to a first corresponding position on the protecting cover; and a sensing range of the flexible sensor at the first position is not less than the first distance.

2. The touch screen module of claim 1, wherein the flexible sensor spaces from the protecting cover at the first position.

3. The touch screen module of claim 2, wherein the flexible sensor is spaced from the protecting cover by a gap existing at the first position.

4. The touch screen module of claim 1, wherein the flexible sensor further comprises a second position; a second distance is from the second position on the flexible sensor to a second corresponding position on the protecting cover; and the second distance is less than the first distance.

5. The touch screen module of claim 4, wherein the flexible sensor attaches to the protecting cover at the second position.

6. The touch screen module of claim 4, wherein the sensing range of the flexible sensor at the first position is greater than that of the flexible sensor at the second position.

7. The touch screen module of claim 4, wherein a voltage of the flexible sensor at the first position is greater than a voltage of the flexible sensor at the second position.

8. The touch screen module of claim 4, wherein a voltage of the flexible sensor at the first position is equal to a voltage of the flexible sensor at the second position.

9. The touch screen module of any one of claims 1-8, wherein the first position on the flexible sensor is a bending area of the flexible sensor; and the first corresponding position on the protecting cover is a bending area of the protecting cover.

10. The touch screen module of claim 9, wherein the bending area of the protecting cover is a right-angle area.

11. The touch screen module of claim 9, wherein the bending area of the flexible sensor is a rounded corner area.

12. The touch screen module of claim 9, wherein the flexible sensor further comprises a non-bending area; and a voltage at the bending area of the flexible sensor is greater than a voltage at the non-bending area of the flexible sensor.

13. The touch screen module of any one of claims 1-8, wherein the first position on the flexible sensor is a non-bending area of the flexible sensor; and the first corresponding position on the protecting cover is a bending area of the protecting cover.

14. The touch screen module of claim 13, wherein the protecting cover is in a sphere shape; the flexible sensor is in a cubic shape; vertexes of the flexible sensor contact with the protecting cover; the non-bending areas of the flexible sensor are six planes of the flexible sensor; and the bending area of the protecting cover is spherical surface corresponding to the six planes of the flexible sensor.

15. The touch screen module of claim 13, wherein a voltage at the non-bending area of the flexible sensor is greater than a voltage at other areas of the flexible sensor.

16. An electronic device, comprising the touch screen module of any one of claims 1-15.
